# EUROPEAN PATENT APPLICATION

(11) **EP 2 578 351 A1**
(43) Date of publication of application: **10.04.2013**
(21) Application number: 11789167.1
(22) Date of filing: 30.05.2011
(51) Int. Cl.: B23P 15/00, B61D 17/04

(54) **DRIVER'S CAB OF MAGNETICALLY LEVITATED TRAIN AND MANUFACTURING METHOD THEREOF**

(30) Priority: 04.06.2010 CN 201010193437
(71) Applicant: Tangshan Railway Vehicle Co., Ltd, Tangshan, Hebei 063035 (CN)
(72) Inventor: WANG, Yonggang, Tangshan Hebei 063035 (CN); LI, Dongfeng, Tangshan Hebei 063035 (CN)
(74) Representative: Gassner, Wolfgang
(86) International application number: PCT/CN2011/074847
(87) International publication number: WO 2011/150788

(57) **Abstract**

A driver's cab of a magnetically levitated train and a manufacturing method thereof are disclosed. The manufacturing method comprises the steps of: processing and obtaining two-dimensional framework components made of an aluminum alloy material, and then assembling the processed two-dimensional framework components into a three-dimensional framework; making a three-dimensional cover skin made of the aluminum alloy material with a small curved surface die-less forming process; and assembling the three-dimensional cover skin on the three-dimensional framework. The driver's cab comprises a three-dimensional framework and a three-dimensional cover skin assembled on the three-dimensional framework, wherein a plurality of two-dimensional framework components of the aluminum alloy materials are mutually connected together to form the three-dimensional framework, and the three-dimensional cover skin is made of the aluminum alloy material with a small curved surface die-less forming process. A manner of the three-dimensional framework can be obtained by assembling the two-dimensional framework components of the aluminum alloy material, such that the manufacturing process of the driver's cab can be effectively simplified, the manufacturing cost of the driver's cab can be reduced, and the carrying capacity of the driver's cab of magnetically levitated train can be improved.

## Description

### FIELD OF THE TECHNOLOGY

The present invention relates to vehicle manufacturing technology, and particularly to a driver's cab of a magnetically levitated train and a manufacturing method thereof.

### BACKGROUND

A magnetically levitated train (Maglev train) is levitated by magnetic force and propels the train with a linear motor, which represents an important development direction for urban rail vehicles in the future, due to the advantages such as low noise, safety and environmental protection. Because the Maglev train is featured by that the vehicle is levitated by electromagnetic attraction, and the attraction ability of an electromagnet of the Maglev train is limited, therefore, it is necessary to solve the problem of how to reduce the weight of the Maglev train, such that the Maglev train can have the same carrying capacity with other urban rail vehicles.

Currently, the Maglev train is one type of urban rail vehicles. An urban rail vehicle generally adopts a streamlined drive's cab, mainly comprising a three-dimensional framework and a three-dimensional cover skin, wherein the framework is mainly used for support, and the cover skin is a structure cladding the three-dimensional framework, such that the whole diver's cab can have a streamlined structure and meet the need of driving the train. In the diver's cab of existing urban rail vehicles, the framework generally adopts a structure of steel framework, which is difficult to shape and is heavy; meanwhile, the existing cover skin is generally integrally formed, using glass fiber reinforced plastic (GRP). It can be seen that the diver's cab of existing urban rail vehicles is relatively heavy, such that the carrying capacity of the vehicle is reduced, and the shaping and manufacturing processes are complex. Furthermore, the framework in the diver's cab of existing urban rail vehicles can also adopt a structure of aluminum framework, but a profile structure is generally adopted, which is also relatively difficult to shape.

However, the diver's cab of existing urban rail vehicles is relatively heavy on the whole, the shaping of the three-dimensional framework and the three-dimensional cover skin is complex and high in the manufacturing cost, if used on the Maglev train, the diver's cab of existing urban rail vehicles will hinder the popularization and application of the Maglev train.

### SUMMARY

The present invention provides a driver's cab of a magnetically levitated train and a manufacturing method thereof, which can effectively simplify the shaping complexity of the framework and the cover skin, improve the strength of the driver's cab, reduce the manufacturing cost of the driver's cab of the Maglev train, and facilitate the popularization and application of the Maglev train.

One aspect of the present invention provides a manufacturing method of a driver's cab of a magnetically levitated train, comprising the steps of:

processing and obtaining two-dimensional framework components made of an aluminum alloy material, and then assembling the processed two-dimensional framework components into a three-dimensional framework;

making a three-dimensional cover skin made of the aluminum alloy material with a small curved surface die-less forming process; and

assembling the three-dimensional cover skin on the three-dimensional framework.

Wherein the step of processing and obtaining two-dimensional framework components made of an aluminum alloy material, and then assembling the processed two-dimensional framework components into the three-dimensional framework comprises:

utilizing a planar plate of an aluminum alloy material to process and obtain the two-dimensional framework components with a structure of the planar plate of the aluminum alloy material; and

assembling the processed two-dimensional framework components together, to form the three-dimensional framework.

The step of utilizing a planar plate of the aluminum alloy material to process and obtain the two-dimensional framework components comprises:

cutting the planar plate of an aluminum alloy material into the two-dimensional framework components with an open ring structure.

The step of cutting the planar plate of an aluminum alloy material into the two-dimensional framework components with an open ring structure comprises:

cutting the planar plate of an aluminum alloy material into the two-dimensional framework components with an inverted U-shaped open ring structure, which can be placed both in horizontal and vertical directions when assembled.

Furthermore, the step of utilizing a planar plate of the aluminum alloy material to process and obtain the two-dimensional framework components comprises:

cutting a planar plate of an aluminum alloy material into the two-dimensional framework components via inserting slots.

The step of making the three-dimensional cover skin made of the aluminum alloy material with a small curved surface die-less forming process comprises:

utilizing a shaping machine to press the skin material of the aluminum alloy and obtain a skin component; and

assembling the skin components into the three-dimensional cover skin.

The step of assembling the processed two-dimensional framework components into the three-dimensional framework comprises:

assembling the processed two-dimensional framework components into the three-dimensional framework by welding.

Another aspect of the present invention provides a driver's cab of magnetically levitated train, comprising a three-dimensional framework and a three-dimensional cover skin which is cladded on the three-dimensional framework, wherein the three-dimensional framework comprises: a plurality of two-dimensional framework components made of the aluminum alloy materials are mutually connected together; and the three-dimensional cover skin is made of the aluminum alloy material with a small curved surface die-less forming process.

The two-dimensional framework component is of the planar plate structure made of the aluminum alloy material. The two-dimensional framework component is provided with an inverted U-shaped open ring structure, and each of the two-dimensional framework components is connected with the other with the open ring structure, to form the three-dimensional framework. Further, the two-dimensional framework components are provided with inserting slots, and the two-dimensional framework components are inserting-connected with each other via the inserting slots, to form the three-dimensional framework.

The driver's cab of magnetically levitated train and manufacturing method thereof according to the present invention assemble a plurality of two-dimensional framework components to obtain a three-dimensional framework, such that the manufacturing of the three-dimensional framework becomes simple, and the manufacturing cost of the whole driver's cab can be effectively reduced; in the technical solutions of the present invention, a plurality of skin components are welded together to form a three-dimensional cover skin, such that the manufacturing of the three-dimensional cover skin becomes simple, and the manufacturing cost of the whole driver's cab can be further reduced; both the three-dimensional framework and the three-dimensional cover skin in the technical solutions of the present invention adopt the aluminum alloy materials, such that the whole driver's cab is light in weight, and the carrying capacity of the whole train can be effectively improved. The technical solutions of the present invention can effectively simplify the manufacturing process of the driver's cab, reduce the manufacturing cost of the Maglev train, improve the carrying capacity of the Maglev train, and be beneficial to popularization and application of the Maglev train.

### BRIEF DESCRIPTION OF THE DRAWINGS

FIG.1 is a main view of a driver's cab of a magnetically levitated train according to an embodiment of the present invention;

FIG.2 is a left view of a driver's cab of a magnetically levitated train according to an embodiment of the present invention;

FIG.3 is a top view of a driver's cab of a magnetically levitated train according to an embodiment of the present invention;

FIG.4 is a structural schematic diagram of a three-dimensional framework according to an embodiment of the present invention;

FIG.5A is a structural schematic diagram of a two-dimensional framework component according to an embodiment of the present invention;

FIG.5B is a partial enlarged schematic diagram of a socket at position A of FIG.5A;

FIG.6 is a main view of a three-dimensional cover skin according to an embodiment of the present invention;

FIG.7 is a left view of a three-dimensional cover skin according to an embodiment of the present invention;

FIG.8 is a schematic flow chart of a manufacturing method of a driver's cab of a magnetically levitated train according to an embodiment of the present invention;

FIG.9 is a schematic flow chart of making a two-dimensional framework component according to an embodiment of the present invention;

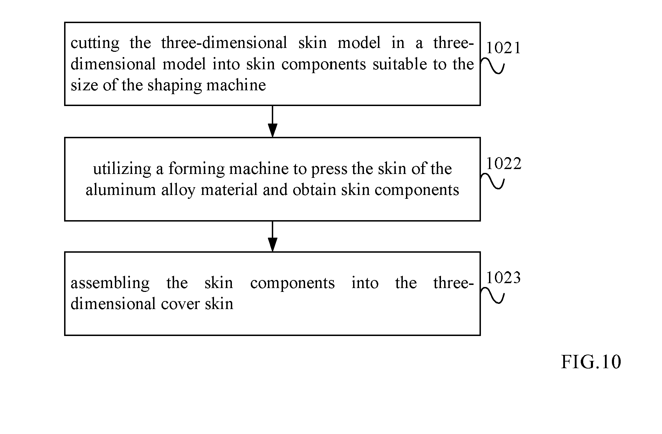

FIG.10 is a schematic flow chart of making a three-dimensional cover skin according to an embodiment of the present invention.

### DETAILED DESCRIPTION

In order to make the purposes, technical solution and advantages of the embodiments of the present invention clearer, the technical solutions in embodiments of the present invention will be clearly and completely described hereinafter with reference to the drawings. Obviously, those embodiments described here are not all but only a part of embodiments of the present invention. On the basis of the embodiments of the present invention described herewith, all other embodiments obtained by those skilled in the art without any creative work should fall in the protection scope of the present invention.

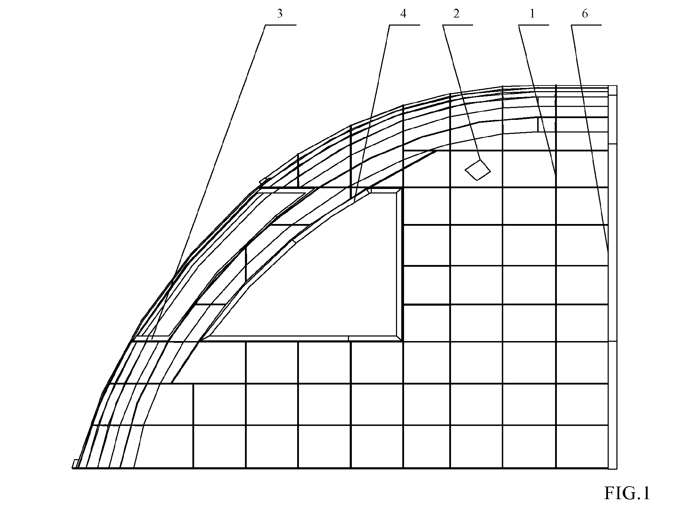

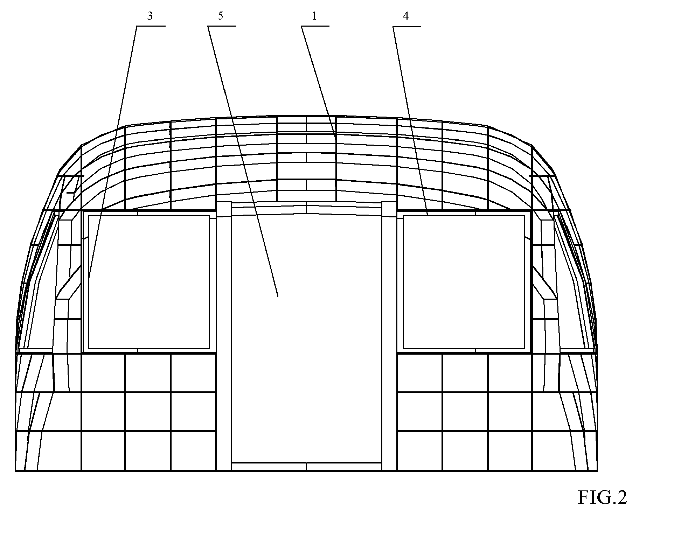

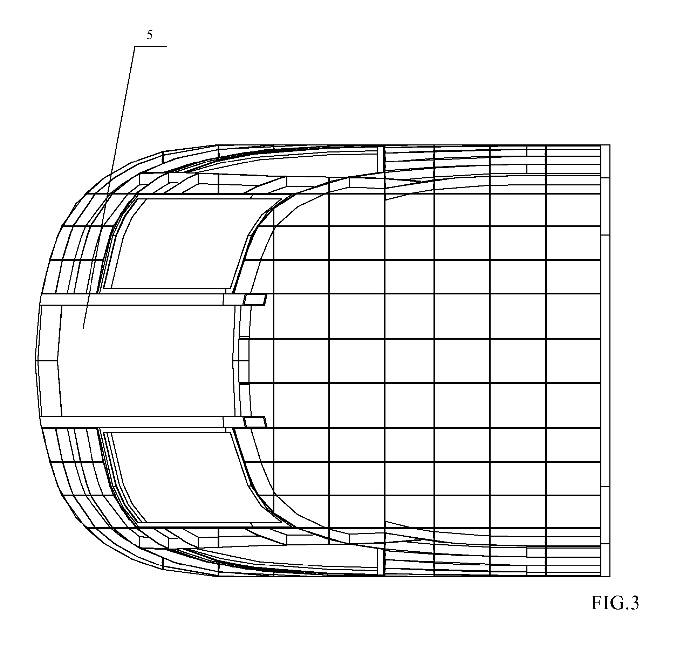

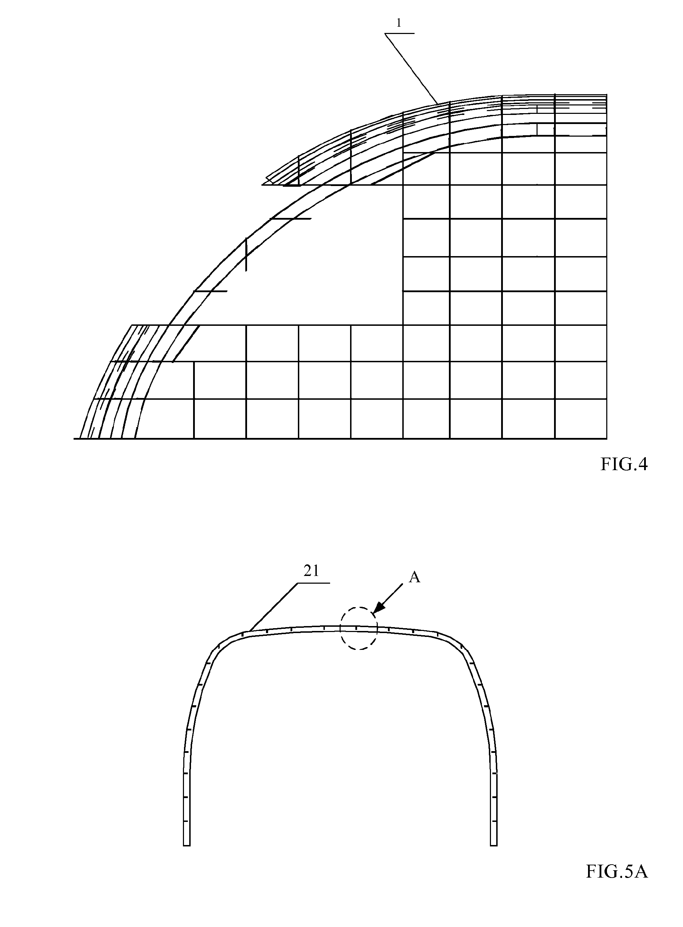

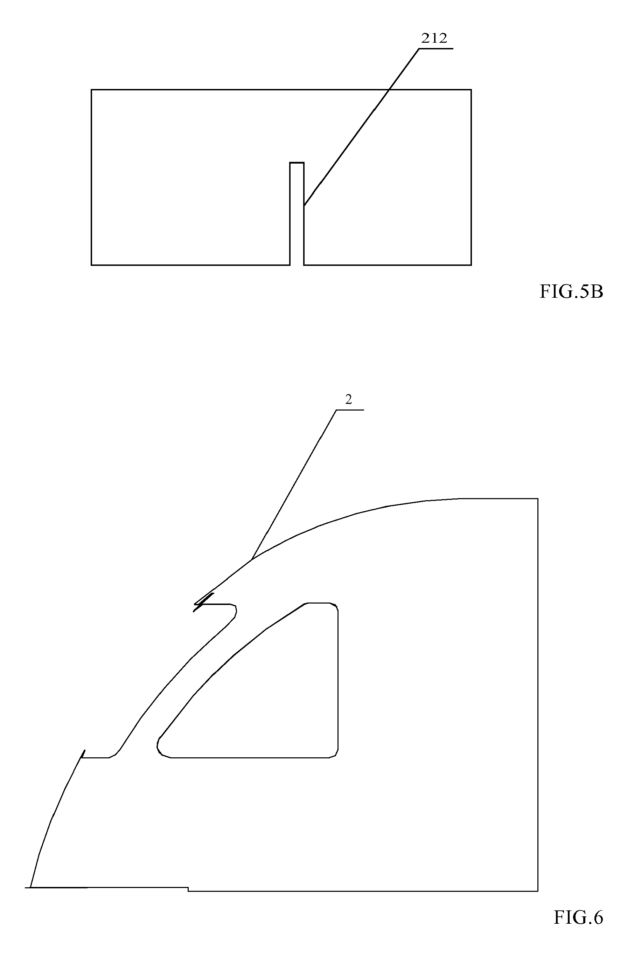

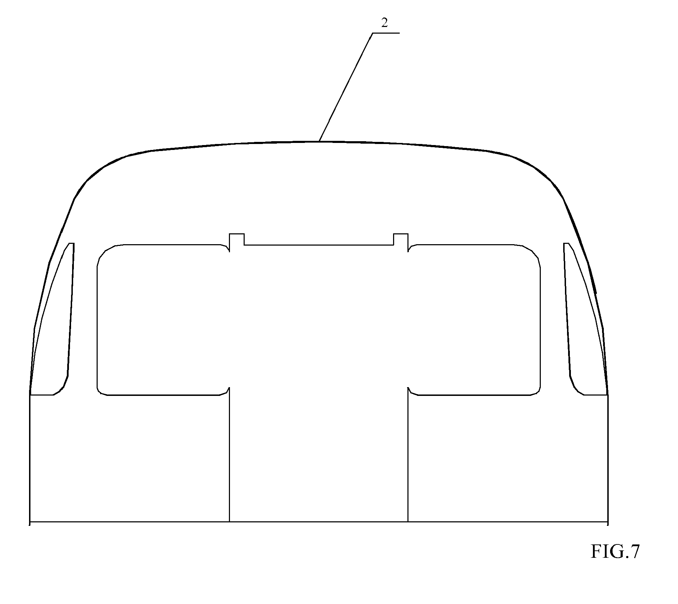

FIG.1 is a main view of a driver's cab of a magnetically levitated train according to an embodiment of the present invention; FIG.2 is a left view of a driver's cab of a magnetically levitated train according to an embodiment of the present invention; FIG.3 is a top view of a driver's cab of a magnetically levitated train according to an embodiment of the present invention; FIG.4 is a structural schematic diagram of a three-dimensional framework according to an embodiment of the present invention; FIG.5A is a structural schematic diagram of a two-dimensional framework component according to an embodiment of the present invention; FIG.5B is a partial enlarged schematic diagram of a socket at position A of FIG.5A; FIG.6 is a main view of a three-dimensional cover skin according to an embodiment of the present invention; and FIG.7 is a left view of a three-dimensional cover skin according to an embodiment of the present invention. In this embodiment, the driver's cab comprises a three-dimensional framework 1, a three-dimensional cover skin 2, a front window frame assembly 3, a side window frame assembly 4, an escape door frame assembly 5 and an end connection frame assembly 6, wherein a plurality of two-dimensional framework components 21 are connected to each other to form the three-dimensional framework 1, two-dimensional framework component 21 can be made of aluminum alloy material, and the three-dimensional cover skin 2 is made of aluminum alloy material via a small curved surface die-less forming process, and comprises a plurality of skin components mutually connected together, and the three-dimensional cover skin 2 clads the three-dimensional framework 1.

In this embodiment, the two-dimensional framework components 21 can be processed by a numerical control machine, and the raw material to be processed can be a planar plate of an aluminum alloy material. Meanwhile, in this embodiment, the two-dimensional framework components 21 can be an open ring structure for interlinking with each other, and particularly, as shown in FIGS.5A and 5B, the two-dimensional framework components 21 can be designed as an inverted U-shaped open ring structure. Each of the two-dimensional framework components 21 also can be provided with one or more inserting slots 212 for inserting connection between the two-dimensional framework components 21, such that the two-dimensional framework components can be mutually inserting-connected with each other, and thus the stability and reliability of the connection between the two-dimensional framework components 21 can be guaranteed.

In an embodiment, the two-dimensional framework components can be fixedly connected with each other by welding, and the cover skin components can also be fixedly connected with each other by welding. Furthermore, those skilled in the art can understand that, the two-dimensional framework components, or the cover skin components, can be fixedly connected with each other via other methods, such as a bolt connection.

It can be seen that, in this embodiment, the three-dimensional framework can be formed by combining a plurality of two-dimensional framework components, since it is easy to shape the two-dimensional framework components, which makes the manufacturing process of the combined three-dimensional framework easier at a lower manufacturing cost; meanwhile, the three-dimensional cover skin can be made with a small curved surface die-less forming process, and particularly, each of the skin components can be obtained by a pressing process with a die-less forming machine, and the skin components are assembled into the three-dimensional cover skin, such that the shaping of the three-dimensional cover skin is simple, and the manufacturing cost of the whole driver's cab can be further reduced. Furthermore, because both the three-dimensional framework and the three-dimensional cover skin in this embodiment adopt the aluminum alloy material, the whole driver's cab is light in weight, the carrying capacity of the train can be effectively improved and it is beneficial to popularization and application of the Maglev train.

Seen from the above, the driver's cab of the magnetically levitated train in this embodiment assembles a plurality of two-dimensional framework components to obtain a three-dimensional framework, such that the manufacturing of the three-dimensional framework becomes simple, and the manufacturing cost of the whole driver's cab can be effectively reduced. In this embodiment, a plurality of cover skin components are welded together to form a three-dimensional cover skin, such that the manufacturing of the three-dimensional cover skin becomes simple, and the manufacturing cost of the whole driver's cab can be further reduced. Both the three-dimensional framework and the three-dimensional cover skin in this embodiment adopt aluminum alloy material, such that the whole driver's cab is light in weight, and the carrying capacity of the train can be effectively improved. The driver's cab of the magnetically levitated train in this embodiment has the advantages of simple structure, easy manufacturing, reduced manufacturing cost and relatively high carrying capacity, thus facilitating the popularization and application of the Maglev train.

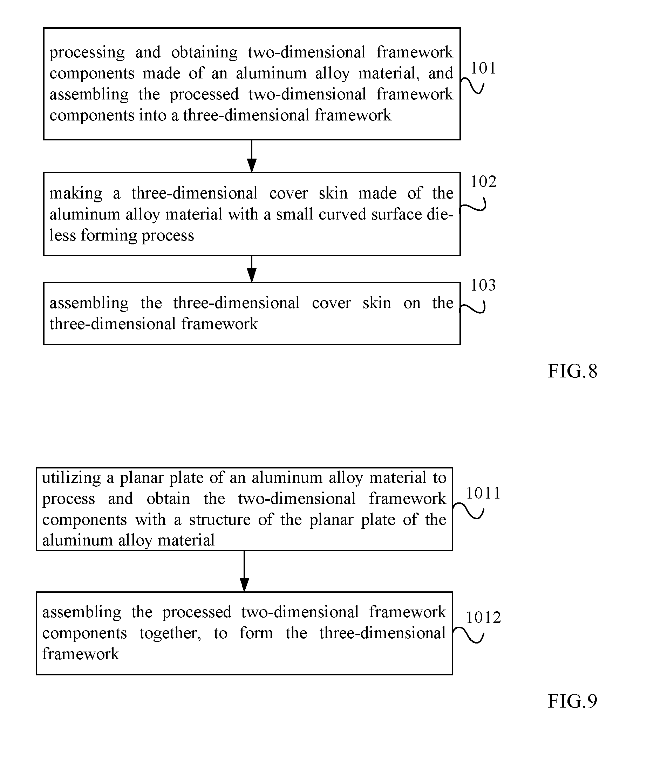

FIG.8 is a schematic flow chart of a manufacturing method of a driver's cab of magnetically levitated train according to an embodiment of the present invention. Particularly, as shown in FIG.8, the manufacturing method in this embodiment comprises the following steps:

Step 101, processing and obtaining two-dimensional framework components made of an aluminum alloy material, and then assembling the processed two-dimensional framework components into a three-dimensional framework;

Step 102, making a three-dimensional cover skin made of an aluminum alloy material with a small curved surface die-less forming process; and

Step 103, assembling the three-dimensional cover skin on the three-dimensional framework.

In this embodiment, after processing and obtaining two-dimensional framework components, the processed two-dimensional framework components are assembled into the three-dimensional framework by welding, such that the strength and rigidity of the three-dimensional framework can be guaranteed, and the carrying capacity of the three-dimensional framework as a whole can be improved.

FIG.9 is a schematic flow chart of making a two-dimensional framework component according to an embodiment of the present invention. In this embodiment, as shown in FIG.9, the steps of processing and obtaining two-dimensional framework components made of an aluminum alloy material, and then assembling the processed two-dimensional framework components into a three-dimensional framework, in step 101 in FIG.8 above, particularly comprise the following steps of:

Step 1011, utilizing a planar plate of an aluminum alloy material to process and obtain the two-dimensional framework components with a structure of the planar plate of the aluminum alloy material; and

Step 1012, assembling the processed two-dimensional framework components together, to form the three-dimensional framework.

In this embodiment, utilizing a planar plate of an aluminum alloy material to process and obtain the two-dimensional framework components particularly is: cutting the planar plate of an aluminum alloy material into the two-dimensional framework components with an open ring structure, during the manufacturing process thereof, forming the two-dimensional framework components with an inverted U-shaped open ring structure, which can be placed n horizontal direction or vertical direction. It is easy to assemble, with a relatively high strength, and the structure is simple.

Furthermore, in this embodiment, during the manufacturing process of the two-dimensional framework components, cutting a planar plate of an aluminum alloy material into the two-dimensional framework components 21 with inserting slots 212, such that the two-dimensional framework components 21 can be connected with each other by inserting-connection via corresponding inserting slots 212, guaranteeing that the assembly of the two-dimensional framework components is convenient and stable, and the assembled three-dimensional framework is firm and reliable. Particularly, when the two-dimensional framework components with inserting slots are assembled into the three-dimensional framework, two-dimensional framework components placed in a horizontal direction are interlinked with two-dimensional framework components placed in a vertical direction by inserting-connection to form a framework, and meanwhile, the frameworks can be connected by welding to guarantee the strength of the assembled three-dimensional framework.

FIG. 11 is a schematic flow chart of making a three-dimensional cover skin according to an embodiment of the present invention. In this embodiment as shown in FIG. 11, making a three-dimensional cover skin made of the aluminum alloy material with a small curved surface die-less forming process, in step 102 in FIG.8 above, which particularly comprises the following steps of:

Step 1021, cutting the three-dimensional skin model in a three-dimensional model into skin components suitable to the size of the shaping machine;

Step 1022, utilizing a forming machine to press the skin of the aluminum alloy material and obtain skin components; and

Step 1023, assembling the skin components into the three-dimensional cover skin

In this embodiment, during the manufacturing process of the three-dimensional framework, firstly, directly input a designed drawing into the numerical control machine, cutting the planar plate of an aluminum alloy material into the two-dimensional framework component with a desired shape and structure, assemble the cut two-dimensional framework components into a three-dimensional framework, and the two-dimensional framework components can be fixedly connected with each other by welding, secondly, when a three-dimensional cover skin of the aluminum alloy material is made with a small curved surface die-less form process, adopt an aluminum alloy plate with a thickness of 3mm as the raw material, cut the three-dimensional cover skin model drawing in the three-dimensional cover skin model into several pieces of skin component models whose size are suitable to the forming machine, find out an inner surface and an outer surface of the skin component, input them into the die-less forming machine, and meanwhile, input the thickness of each skin component, adjust the coefficient of resilience and the forming points to press and shape the plate of an aluminum alloy material and obtain each of the skin components; finally, assemble the skin components on the three-dimensional framework, each of the skin components is welded with the other, and the whole three-dimensional cover skin is welded on the three-dimensional framework. It can be seen that, the three-dimensional framework and the three-dimensional cover skin in this embodiment have a simple manufacturing process, and each component is easy to shape, meanwhile, both the three-dimensional framework and the three-dimensional cover skin in this embodiment adopt the aluminum alloy materials, such that the whole driver's cab is light in weight, and the carrying capacity and strength of the whole train can be improved.

In this embodiment, the aluminum alloy materials adopted in the manufacturing of the three-dimensional cover skin can be a weldable aluminum alloy material, not only guaranteeing the welding performance among each of the skin components, but also guaranteeing the anticorrosive property of the whole driver's cab. Particularly, the aluminum alloy materials adopted in this embodiment accord with the European standards, and the material list is as follows:

| Material | Status | Thickness | Strength limit | | Elastic limit | |
|---|---|---|---|---|---|---|
| | | | Non weld zone | Weld zone | Non weld zone | Weld zone |
| EN AW-6005A | T6 hollow extruded profile | t≤5mm | 255 | 165 | 215 | 115 |
| | | 5mm<t≤15mm | 250 | 165 | 200 | 115 |
| EN AW-5083 | H111 | 0.2mm<t≤50mm | 275 | 275 | 125 | 125 |

Seen from the above, the driver's cab of magnetically levitated train in this embodiment assembles a plurality of two-dimensional framework components to obtain a three-dimensional framework, such that the manufacturing of the three-dimensional framework becomes simple, and the manufacturing cost of the whole driver's cab can be effectively reduced; in this embodiment, a plurality of skin components are welded together to form a three-dimensional cover skin, such that the manufacturing of the three-dimensional cover skin becomes simple, and the manufacturing cost of the whole driver's cab can be further reduced; both the three-dimensional framework and the three-dimensional cover skin in this embodiment adopt the aluminum alloy materials, such that the whole driver's cab is light in weight, and the carrying capacity of the whole train can be effectively improved. The method in this embodiment has a simple manufacturing process and is easy to manufacture, which can effectively reduce the manufacturing cost of the Maglev train, improve the carrying capacity of the Maglev train and be beneficial to popularization and application of the Maglev train.

Finally, it should be noted that the above embodiments are merely provided for describing the technical solutions of the present invention, but not intended to limit the present invention. It should be understood by those skilled in the art that although the present invention has been described in detail with reference to the foregoing embodiments, modifications can be made to the technical solutions described in the foregoing embodiments, or equivalent replacements can be made to some technical features in the technical solutions; however, such modifications or replacements do not cause the essence of corresponding technical solutions to depart from the spirit and scope of the embodiments of the present invention.

## Claims

1. A manufacturing method of a driver's cab of magnetically levitated train, comprising the steps of:
processing and obtaining two-dimensional framework components made of an aluminum alloy material, and assembling the processed two-dimensional framework components into a three-dimensional framework;
making a three-dimensional cover skin made of the aluminum alloy material with a small curved surface die-less forming process; and
assembling the three-dimensional cover skin on the three-dimensional framework.

2. The manufacturing method of a driver's cab of magnetically levitated train according to claim 1, wherein the processing and obtaining two-dimensional framework components made of an aluminum alloy material, and assembling the processed two-dimensional framework components into the three-dimensional framework comprises:
utilizing a planar plate of an aluminum alloy material to process and obtain the two-dimensional framework components with a structure of the planar plate of the aluminum alloy material; and
assembling the processed two-dimensional framework components together, to form the three-dimensional framework.

3. The manufacturing method of a driver's cab of magnetically levitated train according to claim 2, wherein the utilizing a planar plate of the aluminum alloy material to process and obtain the two-dimensional framework components comprises:
cutting the planar plate of an aluminum alloy material into the two-dimensional framework components with an open ring structure.

4. The manufacturing method of a driver's cab of magnetically levitated train according to claim 3, wherein the cutting the planar plate of an aluminum alloy material into the two-dimensional framework components with an open ring structure comprises:
cutting the planar plate of an aluminum alloy material into the two-dimensional framework components with a U-shaped open ring structure, which can be placed both in horizontal and vertical directions when assembled.

5. The manufacturing method of a driver's cab of magnetically levitated train according to claim 2 or 4, wherein the utilizing a planar plate of the aluminum alloy material to process and obtain the two-dimensional framework components comprises:
cutting a planar plate of an aluminum alloy material into the two-dimensional framework components with inserting slots.

6. The manufacturing method of a driver's cab of magnetically levitated train according to claim 1, wherein the making the three-dimensional cover skin made of the aluminum alloy material with a small curved surface die-less forming process comprises:
utilizing a forming machine to press the skin of the aluminum alloy material and obtain skin components; and
assembling the skin components into the three-dimensional cover skin.

7. The manufacturing method of a driver's cab of magnetically levitated train according to claim 1, wherein the assembling the processed two-dimensional framework components into the three-dimensional framework comprises:
assembling the processed two-dimensional framework components into the three-dimensional framework by welding.

8. A driver's cab of magnetically levitated train, comprising a three-dimensional framework and a three-dimensional cover skin which is cladded on the three-dimensional framework, wherein the three-dimensional framework comprises a plurality of two-dimensional framework components made of the aluminum alloy materials which are mutually connected together; and the three-dimensional cover skin is made of the aluminum alloy material with a small curved surface die-less forming process.

9. The driver's cab of magnetically levitated train according to claim 8, wherein the two-dimensional framework components are of aluminum alloy planar plate structure.

10. The driver's cab of magnetically levitated train according to claim 8, wherein the two-dimensional framework components are provided with a U-shaped open ring structure, and the two-dimensional framework components are connected with each other via the U-shaped open ring structure, to form the three-dimensional framework.

11. The driver's cab of magnetically levitated train according to any one of claims 8 to 10, wherein the two-dimensional framework components are provided with inserting slots, and the two-dimensional framework components are inserting-connected with each other via the inserting slots, to form the three-dimensional framework.
